# EUROPEAN PATENT APPLICATION

(11) **EP 4 488 121 A1**
(43) Date of publication of application: **08.01.2025**
(21) Application number: 24382721.9
(22) Date of filing: 04.07.2024
(51) Int. Cl.: B60R 5/04

(54) **LUGGAGE COMPARTMENT OF A VEHICLE COMPRISING A DOUBLE FLOOR, AND METHOD OF RETENTION AND RELEASE OF SAID DOUBLE FLOOR**

(30) Priority: 07.07.2023 ES 202330571
(71) Applicant: Seat, S.A., 08760 Martorell - Barcelona (ES)
(72) Inventor: FERNANDEZ ALBA, Manuel, 08760 Martorell (ES)
(74) Representative: Elzaburu S.L.P.

(57) **Abstract**

The present invention relates to a luggage compartment of a vehicle characterized in that the luggage compartment (100) comprises a rigid element (3) protruding with respect to a side wall and a double floor (200) comprising at least one through recess (1), located on at least one of the lateral ends (203) of the double floor (200) coincident with the at least one of the side walls where the rigid element (3) is disposed, configured to be traversed by the rigid element (3) in the displacement of the double floor (200) between the horizontal position and the inclined position, and a support surface (2), arranged on the inner face of the double floor (200), between the at least one recess (1) and the rear end (201) of the double floor (200), the support surface (2) being configured to contact the rigid element (3) in the inclined position.

## Description

### Field of the Invention

The present invention relates to the automotive field. More specifically, it relates to a luggage compartment of a vehicle, wherein said luggage compartment comprises a double tilting floor.

### Background of the Invention

Luggage compartments with a double floor are well known. This double floor is movable inside the luggage compartment and can be placed by the user in different positions. Thus, the user can obtain a better configuration and customization of the luggage compartment space and allows access to a lower luggage compartment space. It can contain tools, a flat tire repair kit, roadside signaling elements such as reflective warning triangles or lights, a jack, a spare tire, a first aid kit, or other items.

The double floor comprises:
- a rear end according to a longitudinal direction of the vehicle which is arranged opposite the tailgate or movable luggage compartment closing element,
- a front end opposite the rear end, wherein the front end is substantially parallel to the rear end, and
- two lateral ends parallel to each other and substantially perpendicular to the front end and the rear end.

The double floor can be movable between a first position, or horizontal position. In said horizontal position, the double floor may form the luggage compartment floor, i.e., wherein the double floor is positioned substantially horizontal and adjacent to said luggage compartment floor, or it may be arranged substantially horizontal but elevated with respect to said luggage compartment floor. In this raised horizontal position, the double floor is supported by support structures protruding from the side walls of the luggage compartment. It is common that the double floor can be moved between both horizontal positions according to the user's needs. In addition, the double floor can be moved to a second, or inclined position, where the rear end of the double floor is arranged in a raised position relative to the front end so as to allow access to the lower recess formed by the luggage compartment floor.

As mentioned, the first position of the double floor may be adjacent to the floor or base of the luggage compartment or, on the contrary, located at a certain distance with respect to said floor or base of the luggage compartment, according to a vertical direction. The structure and materials of the double floor allow the double floor to support heavy objects even in the raised horizontal position.

The double floor can be fixed in this inclined position by means of a retaining device. Sometimes it is necessary to fix or immobilize the raised position of the double floor of the luggage compartment, for example, to facilitate access to the elements located in the lower compartment since; by fixing the double floor in an inclined position, the user has his hands free to access and manipulate these elements.

Retaining devices are known to comprise an elastic element configured to be deformed by a lateral end of the double floor when the double floor is displaced between the horizontal and inclined position. It is known that the elastic element comprises a first support surface, so that the elastic element supports the double floor in the second position by means of said first support surface.

The elastic element is configured to support the weight of the double floor in this inclined position without deformation. Deformation of the elastic element only occurs if an additional force is applied to overcome and deform the elastic element in order to move the double floor back from its second position to its first horizontal position, or to move it from the first horizontal position to the second inclined position.

An example of such solutions is patent EP1806261, which describes a system comprising a double floor, movable between the first position, which allows a horizontal loading of the luggage compartment, and the second raised position, where the elastic means is composed of elastically movable clips during the lifting or lowering movement of the double floor.

Since it is an elastically movable medium, it may encounter certain limitations, for example, exceeding the elastic limit of the clip, resulting in permanent deformation of the element, and making it impossible to retain the double floor in the second position. Additionally, the need to apply a force to deform the elastic element translates into a frictional force between the elastic element and the end of the double floor, resulting in surface deterioration of the components and a poor visual appearance after several working cycles have been completed.

It is therefore desirable a device for retaining a double floor of a luggage compartment which provides convenient, efficient, and durable operation, which reduces wear and tear on the elements of the luggage compartment, avoiding the disadvantages existing in the devices of the prior art.

### Summary of the Invention

The object of the present invention is to provide a solution relating to a luggage compartment of a vehicle allowing easy and convenient access for a user to the floor of the luggage compartment, for which purpose the double floor comprised in said luggage compartment is to be displaced and retained in a position elevated with respect to the horizontal.

Unlike other known processes, the luggage compartment of the present application features at least one rigid element disposed on at least one of the side walls of the luggage compartment. Said rigid element protrudes with respect to the side wall where it is located, or first side wall, in the direction of the side wall opposite said first side wall.

As initially discussed, the luggage compartment comprises a double floor movable between a first position, horizontal position, where the rear end and the front end are separated at substantially the same distance with respect to the floor of the luggage compartment, and a second position, inclined position, where the rear end is arranged in an elevated position with respect to the front end. For this purpose, the double floor, in a horizontal position, is configured to rest on the base of the luggage compartment or on double floor support structures arranged protruding from the side walls of the luggage compartment at a height elevated with respect to the base of the luggage compartment. The double floor, in an inclined position, can be held or immobilized without the need for the user's hands, so that the lower part of the luggage compartment can be accessed.

Unlike other previous solutions, the double floor comprises at least one recess located on at least one of the lateral ends of the double floor. The side end comprising said recess is coincident with the at least one of the side walls where the at least one rigid element is disposed. The recess is through, i.e. it completely passes through the double floor from the lower wall to the upper wall. Furthermore, said recess is configured to be traversed by the rigid element in the up and down displacement of the double floor between the horizontal position and the inclined position. Consequently, its position in the double floor, its geometry and its dimensions shall be such as to allow the respective rigid element to pass through such a recess. Consequently, during the upward movement of the double floor from the horizontal position to the inclined position, or during the downward movement of the double floor from the inclined position to the horizontal position, there is no elastic force to overcome, but the double floor can move freely between the two positions only if care is taken that the rigid element pass through the respective recess.

In addition, the double floor has a support surface. This support surface is arranged on the inner side of the double floor, i.e., the side facing the lower floor of the luggage compartment. In this way, once the rigid element has traversed the recess, the inner face of the double floor also faces the rigid element, so that the support surface can contact the rigid element.

In embodiments where the double floor comprises a rigid body completely covering the base of the luggage compartment, the support surface is arranged between the at least one recess and the rear end. In other words, the bearing surface is located above the recess when the double floor is in an inclined position.

Therefore, the proposed luggage compartment is able to retain a double floor in an inclined position in a simple and ergonomic way, without the need for additional parts or moving elements that complicate both the production process and the luggage compartment assembly processes.

In a second aspect, the invention relates to a method of retaining a double floor.

The method of holding a double floor allows the holding of a double floor in an inclined position. To do so, the following steps are required:
- raising the rear end of the double floor,
- moving the double floor so that at least one rigid element passes through the respective recess, and
- moving the double floor to the inclined position.

By raising the rear end, the double floor moves to an activated position, where the at least one recess located at one of the side ends of the double floor coincides with the rigid element located in at least one of the side walls. To reach this position, the double floor must undergo activation by an external force. That is to say, the double floor not only presents a rotational movement during its displacement between the horizontal position and the inclined position, since the recess of the double floor must be aligned with the respective rigid element in order to be crossed by it during the upward displacement.

Once the rigid element has passed the recess, the double floor can recover an inclined position, without the previous activation. The result of this displacement is that the bearing surface coincides with the rigid element. In this way, the rigid element can retain and immobilize the double floor in the inclined position giving a user access to the base of the luggage compartment.

Similarly, according to a third aspect of the present invention, a method of releasing a double floor from an inclined position in a luggage compartment is described, which comprises the following steps.
- raising the rear end of the double floor,
- moving the double floor so that at least one rigid element passes through the respective recess, and
- lowering the rear end of the double floor to the horizontal position.

To lift the rear end, the user must apply an external force. Said force displaces the double floor from an inclined position, where the at least one rigid element is coincident with the support surface, to the activated position, where said rigid element is coincident with the at least one recess. Once the obstacle represented by the at least one rigid element has been overcome, the double floor can move freely to the horizontal position.

In the figures of the present invention, reference is made to the following set of elements:
- 100: luggage compartment
- 200: double floor
- 201: rear end
- 202: front end
- 203: lateral ends
- 1: recess
- 2: support surface
- 3: rigid element
- 4: sliding surface
- 5: bearing face
- 6: secondary body
- 7: first end of secondary body
- 8: second end of secondary body
- 9: hinged joint

### Description of the Figures

Figure 1 shows a perspective view of an embodiment of a vehicle luggage compartment, where a double floor is in the horizontal position.
Figure 2 shows a perspective of an embodiment of a vehicle luggage compartment, where a doppelganger is in the inclined position, being retained by a rigid element.
Figure 3 shows a detail perspective of an embodiment of a recess of a side end of a double floor, the double floor being arranged in the activated position, wherein the recess is coincident with a rigid element in the form of a triangular prism protruding from the side wall of the vehicle luggage compartment.
Figure 4 shows a detail perspective of an embodiment of a recess of a side end of a double floor, the double floor being arranged in the inclined position, wherein the supporting surface is coincident with a rigid element in the form of a triangular prism protruding from the side wall of the vehicle luggage compartment.
Figure 5 shows the elevation of a set of realizations of rigid elements of a luggage compartment, such realizations being differentiated by the geometrical section of such rigid elements: a) equilateral triangle, b) right triangle, c) semihexagonal and d) semicircular.

### Detailed Description of the Invention

The object of the present invention is a luggage compartment (100) of a vehicle. Said luggage compartment (100) has a base and side walls, which delimit the cargo space of said luggage compartment (100). In addition, the luggage compartment (100) features a double floor (200), which can be moved by a user between different positions.

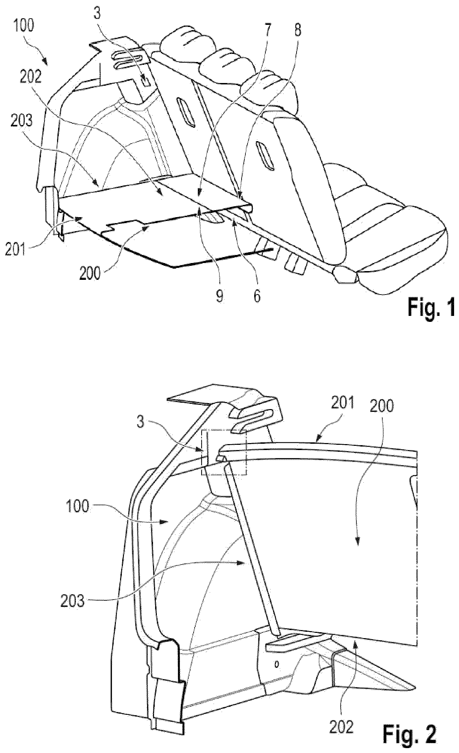

Figure 1 shows a perspective view of an embodiment of the luggage compartment (100), wherein a double floor (200) is in a horizontal position, which is elevated with respect to the base surface of said luggage compartment (100). Said double floor (200) comprises a rear end (201) according to a longitudinal direction facing a tailgate of the luggage compartment (100), a front end (202) opposite the rear end (201) and facing the rear seats of the vehicle, and two side ends (203) parallel to each other and substantially perpendicular to the rear end (201) and the front end (202).

Said double floor (200) is movable in the luggage compartment between a horizontal position, as shown in Figure 1, the rear end (201) and the front end (202) being spaced substantially the same distance apart with respect to the base of the luggage compartment (100), so that the double floor (200), located in the horizontal position, is configured to rest on the luggage compartment floor or on support structures of the double floor (200) arranged protruding from the side walls of the luggage compartment at a height elevated with respect to the luggage compartment floor; and an inclined position. Said inclined position can be appreciated, for example, in Figure 2, where it shows a perspective of an embodiment of a vehicle luggage compartment with the double floor (200) being retained by a rigid element (3), so that a user can easily access the lower space of the luggage compartment base (100).

The horizontal position of the double floor (200) gives rise to a second floor, above the luggage compartment floor, where objects can be accommodated. For proper use, the double floor (200) completely covers the surface of the luggage compartment floor (100) so that no objects can accidentally fall onto the luggage compartment floor (100). Therefore, a user must move the double floor (200) to an inclined position in order to access objects inserted in the luggage compartment floor.

Unlike other previous solutions, the luggage compartment (100) comprises:
- at least one rigid element (3) arranged on at least one of the side walls of the luggage compartment and protruding with respect to the side wall towards the opposite side wall of said luggage compartment (100); and
- a double floor (200) comprising at least one through recess (1) and a support surface (2).

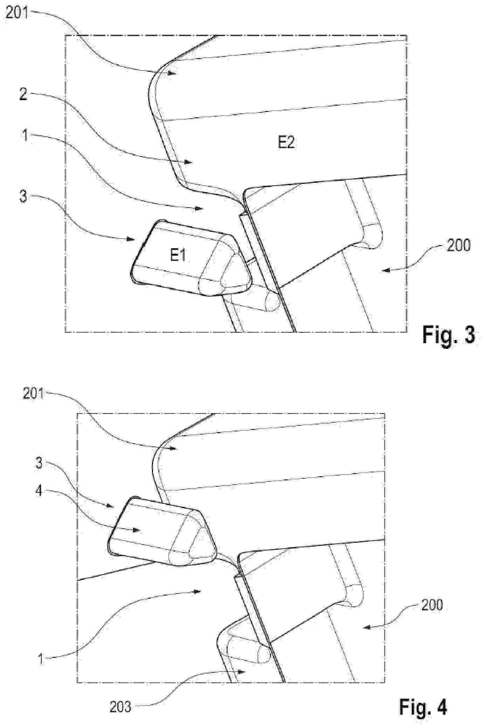

Figure 3 shows a detail perspective of an embodiment of the recess (1) arranged at a side end (203) of a double floor (200). Said figure 3 represents an intermediate position, or activated position, wherein the recess (1) is coincident with a rigid element (3) in the form of a triangular prism protruding from the side wall of the vehicle luggage compartment. As will be explained later, this activated position is necessary to be able to move the double floor (200) between the horizontal position and the inclined position.

Figure 4, on the other hand, shows a detail perspective of an embodiment of the recess (1) of a lateral end (203) of a double floor (200). In this Figure 4, a double floor (200) immobilized in the inclined position can be seen, where the support surface (2) is coincident with a rigid element (3) in the form of a triangular prism protruding from the side wall of the vehicle luggage compartment. In this way, the weight of the double floor (200) rests partially on the rigid element (3) due to the contact between said rigid element (3) and the support surface (2), preventing the double floor (200) from moving freely towards the horizontal position.

As can be seen in these figures, the double floor (200) comprises at least one through recess (1). Said recess (1) is located in at least one of the lateral ends (203) of the double floor (200), where said lateral end (203) is coincident with the at least one of the side walls where the at least one rigid element (3) is arranged. Thus, the at least one recess (1) is configured to be traversed by said rigid element (3) in the displacement of the double floor (200) between the horizontal position and the inclined position. According to a preferred embodiment, the double floor (200) comprises two recesses (1), each recess (1) being located at each of the lateral ends of the double floor (200). In turn, the luggage compartment (100) comprises two rigid elements (3) arranged on each of the side walls of the luggage compartment (100). In this way, better stability of the double floor (200) is achieved when the double floor is arranged in the inclined position.

The double floor (200) further comprises a support surface (2). Said support surface (2) is arranged on the inner face of the double floor (200), between the at least one recess (1) and the rear end (201) of the double floor (200), the support surface (2) being configured to contact the rigid element (3).

In this way, the double floor (200) is susceptible, during the displacement of the double floor (200) between the horizontal position and the inclined position, to be arranged in an activation position, wherein said at least one recess (1) of the double floor (200) is coincident with the rigid element (3), such that said recess (1) is traversable by the rigid element (3), depicted in Figure 3. Thus, both in the inclined position and in intermediate positions where the front end (202) of the double floor contacts the base or floor of the luggage compartment (100), there would be an interference between the body of the double floor (200) and the rigid element (3), preventing the recess (1) from being crossed by the rigid element (3). Thus, in order for the rigid element (3) to pass through the recess (1), the user must slightly raise the double floor (200), such that the front end (202) does not contact the floor or base of the luggage compartment (100). This activated position depicted in Figure 3 allows the double floor (200) to be moved between the inclined position and the horizontal position, overcoming the obstacle of the at least one rigid element (3).

Also, thanks to the support surface (2) of the double floor (200), coincident with the rigid element (3) in the inclined position of the double floor (200), it is achieved, not only contact with the rigid element (3), but also the holding of said double floor (200) in an inclined position, such that the user of the luggage compartment (100) can freely access the lower level of the luggage compartment floor (100), without the need to hold the double floor (200) with one of his hands. It is understood that, in said inclined position, the double floor (200) has two supports: the front end (202) contacting the base or floor of the luggage compartment (100) and the support surface (2) contacting the rigid element (3), thus achieving a stable inclined position.

Preferably, the support surface (2) is positioned superiorly to the recess (1) when the double floor (200) is arranged in the inclined position. In this way, the passage from the activated position, where the recess (1) is aligned with the rigid element (3), to the inclined position, where the support surface (2) is the one aligned with the rigid element (3), can be made by gravity, without the need of an external input of force, which facilitates its use and manipulation by the user.

In a preferred embodiment, the front end (202) of the double floor (200) is configured to rest on the floor of the luggage compartment (100) or on support structures of the double floor (200) arranged protruding from the side walls of the luggage compartment (100), the double floor (200) being in the inclined position. However, when the double floor (200) is placed in the activated position, said front end (202) does not support with the luggage compartment floor (100) or with the double floor support structures (200). During the transition between the horizontal position and the inclined position, both in the upward and downward movement, it is necessary to slightly raise the double floor (200) with respect to the floor of the luggage compartment (100) or to said supporting structures, so that the double floor (200) is arranged in said activation position and, consequently, the rigid element (3) can pass through the respective recess (1).

According to one embodiment, the inclined position of the double floor (200) presents an angle greater than 45°, whereby, it is achieved that most of the weight of the double floor (200) is supported by the luggage compartment floor (100) or the supporting structures in their support with the front end (202), by supporting most of the vertical component of the weight of the double floor (200). Consequently, most of the longitudinal component of the inclined double floor (200) is compensated by the support between the rigid element (3) and the support surface (2).

Additionally, the configuration of the luggage compartment (100) according to the present invention generates an improvement in the maintenance of the elements forming the luggage compartment (100). In this sense, friction and deformation are avoided, as in other state-of-the-art solutions, where elastic or deformable solutions are used.

In a preferred embodiment, as shown in Figure 1, the double floor (200) comprises a secondary body (6), mechanically linked to the front end (202) by means of a hinged joint (9). Thus, a first end (7) of the secondary body (6) is joined to the front end (202). Similarly, in an embodiment comprising said secondary body (6), the support of the double floor (200) on the floor of the luggage compartment (100) or with the supporting structures is likewise carried out by the front end (202), where the hinged joint (9) is located. This hinged joint (9) can optionally be attached to the central area of the front end (202) of the double floor (200) or be a lateral joint. An example of a hinged joint (9) is a hinge arranged along the front end (202). For its part, the second end (8) of the secondary body (6) is configured to contact the backrest of the rear seat, in order to generate a continuous surface with the main body of the double floor (200), so that there are no gaps through which objects can fall, especially in the raised horizontal position of the double floor (200).

As can be seen in Figure 5, there are numerous embodiments for the rigid element (3) of a luggage compartment (100) according to the present invention. In a preferred embodiment, the rigid element (3) comprises a bearing face (5). Said bearing face (5) is configured to contact the support surface (2). It is preferable that the bearing face (5) is arranged substantially parallel to said support surface (2) when the double floor (200) is in the inclined position. This reduces wear and tear on the luggage compartment elements (100). Moreover, said parallelism between the bearing face (5) and the support surface (2) favors the sliding between both, thus allowing to easily lift the double floor (2) in its displacement between the inclined rest position and the activated position, thus achieving that the recess (1) is coincident with the rigid element (3) and the double floor (200) can be displaced to a horizontal position. Likewise, said parallelism between the bearing face (5) and the support surface (2) favors the sliding between both, thus allowing to easily lower the double floor (2) in its displacement between the activated position and the inclined rest position, thus achieving that the support surface (2) is coincident with the rigid element (3) and the double floor (200) in said inclined rest position.

Additionally, the rigid element (3) may comprise a sliding surface (4) configured to contact by sliding with the upper surface defining the recess (1) of the double floor (200), the double floor (200) being in the activation position during displacement of said double floor (200) between the horizontal position and the inclined position. In a more preferable embodiment, the sliding surface (4) defines an ascending ramp according to the vehicle's direction of travel. Thus, the ramp is configured to raise the double floor (200) with respect to the point of support of the double floor (200) with the luggage compartment (100) which, as indicated above, may be with the base of the luggage compartment or with respect to the support structures of the double floor (200), in said activation position. Specifically, one can highlight embodiments of the rigid element (3) comprising a triangular shaped cross-section, such as those depicted in Figure 5a and 5b, or a semi-circular cross-section, such as that highlighted in Figure 5d. other alternatives could be a hexagonal embodiment, such as those shown in Figure 5c. Said sliding surface (4) assists the user so that the recess (1) can be traversed by said rigid element (3).

In a preferred embodiment, said rigid element (3) is fixedly arranged, i.e., it does not present a displacement with respect to the side wall of the luggage compartment (100) where it is located. In an even more preferred embodiment, the rigid element (3) forms a single body with the respective side wall of the luggage compartment. This configuration facilitates the manufacture of the luggage compartment as it makes it possible to obtain a rigid element (3) in a single plastic injection molding process.

Alternatively, the rigid element (3) may be mechanically linked with the at least one of the side walls of the luggage compartment (100) such that a displacement of said rigid element (3) in the transverse direction with respect to the respective side wall is blocked. According to the present invention, the transverse direction is understood as the direction in the rolling plane of the vehicle perpendicular to the forward direction of the vehicle, i.e., perpendicular to said side wall. An example of this type of embodiment is a fixed rigid element (3), which has as its only element of freedom a rotation, for example, a bearing style rigid element (3). This type of configuration makes it easier for the user to pass the rigid element (3) through the recess (1).

Therefore, in accordance with the present invention, the double floor (200) performs an upward and downward movement between the horizontal and inclined position, which allows access to the luggage compartment base (100). It is an essentially rotational movement, mainly circular with respect to an axis arranged at the front end (202) of the double floor (200). However, in addition to this circular movement, a slight lifting of the double floor (200) must also be performed in order to access the activated position of the double floor (200), so that the recess (1) is aligned with the rigid element (3). Rotation can be differentiated according to the configuration of the double floor (200) used:
- in the case of double floor (200) of single body, the mentioned rotation is carried out having as axis of rotation the contact produced between the front end (202) and the base of the luggage compartment (100) or the support structures of the double floor (200) or the back of the seats; and
- in the case of double floor (200) with a secondary body (6), the aforementioned rotation is carried out having as axis of rotation the contact occurring between the front end (202) or the supporting structures of the double floor (200), but a displacement of the double floor (200) in the longitudinal direction is avoided since the second end (8) of the secondary body (6) contacts the back of the seats.

Accordingly, a method of retaining the double floor (200) in an inclined position in a luggage compartment (100) and a method of releasing said double floor (200) can be defined.

In one aspect, the method of retaining a double floor (200) in an inclined position in a luggage compartment (100) comprises the following steps:
- raising the rear end (201) of the double floor (200), such that the at least one recess (1) located in at least one of the side ends (203) of the double floor (200) is coincident with the rigid element (3) located in at least one of the side walls of the luggage compartment,
- moving the double floor (200), such that the at least one rigid element (3) passes through the respective recess (1), and
- moving the double floor (200) to the inclined position, such that the support surface (2) of the double floor (200) is coincident with the rigid element (3), said support surface (2) contacting the rigid element (3) to retain the double floor (200) in the inclined position.

The method of retaining a double floor (200) allows for holding a double floor (200) in an inclined position.

Similarly, the method of releasing a double floor (200) from an inclined position in a luggage compartment (100) comprises the following steps.
- raising the rear end (201) of the double floor (200) from an inclined position of said double floor (200), wherein the at least one rigid element (3) located in at least one of the side walls of the luggage compartment (100) is coincident with the support surface (2) of the double floor (200), until said rigid element (3) is coincident with the at least one recess (1) located in at least one of the side ends (203) of the double floor (200);
- moving the double floor (200), such that the at least one rigid element (3) passes through the respective recess (1); and
- lowering the rear end (201) of the double floor (200) to the horizontal position.

Both in the displacement for the release of the double floor (200) and for its retention, when the rear end (201) is raised, the double floor (200) moves to an activated position. Thus, in the displacement from a horizontal position to the inclined position of the double floor (200) the essentially circular rotation displacement is interrupted, introducing an elevation of the double floor (200), thus achieving that the recess (1) is coincident with the rigid element (3). On the contrary, in the displacement from the inclined position to a horizontal position of the double floor (200), the double floor (200) is raised by sliding between the support surface (2) with the bearing face (5) of the rigid element, thus achieving that the recess (1) is coincident with the rigid element (3).

The displacement of the double floor (200) during passage of the rigid element (3) through the recess (1) may or may not be sliding. Thus, in a preferred embodiment, where the rigid element (3) presents a sliding surface (4), the double floor (200) contacts said sliding surface (4) and slides on it until the end of the passage of the rigid element (3). This facilitates the maneuvering of the rigid element (3) through the recess (1). Optionally, the rigid element (3) may present other elements, such as bearings, which favor the passage displacement of the double floor (200) around the rigid element (3) when rotating as a consequence of the displacement of the double floor (200).

Once the recess (1) is crossed by the rigid element (3), the double floor (200) can recover an inclined position, without the previous activation. The result of this displacement is that the support surface (2) coincides with the rigid element (3). In a preferred embodiment, the support surface (2) is arranged between the recess (1) and the rear end (201). In this way, the recovery of the tilted position from the activated position is favored through gravity.

To lift the rear end (201), the user must apply an external force. Said force displaces the double floor (200) from an inclined position, where the at least one rigid element (3) is coincident with the support surface (2), to the activated position, where said rigid element (3) is coincident with the at least one recess (1).

It is noteworthy to point out that a rigid element (3) presenting a bearing-style solution facilitates the displacement of the double floor (200) in both methods, being able to present a rotation in both directions.

Therefore, with the present invention, it is possible to improve the fastening of a double floor (200) in an inclined position, by facilitating the user's work and reducing the wear capacity of the elements used.

## Claims

1. A luggage compartment of a vehicle, comprising a double floor (200), which in turn comprises a rear end (201) according to a longitudinal direction facing a tailgate of the luggage compartment, a front end (202) opposite the rear end (201), and two side ends (203) parallel to each other and substantially perpendicular to the rear end (201) and the front end (202),
wherein the double floor (200) is movable in the luggage compartment (100) between a horizontal position, the rear end (201) and the front end (202) being spaced substantially the same distance apart with respect to the luggage compartment floor (100), such that the double floor (200), located in the horizontal position, is configured to rest on the luggage compartment floor (100) or on support structures of the double floor (200) arranged protruding from the side walls of the luggage compartment (100) at a height elevated with respect to the luggage compartment floor (100); and an inclined position, wherein the double floor (200) is capable of being retained in the luggage compartment (100) such that the rear end (201) is disposed in an elevated position relative to the front end (202);
**characterized in that** the luggage compartment (100) comprises at least one rigid element (3) arranged on at least one of the side walls of the luggage compartment (100) and protruding with respect to the side wall towards the opposite side wall of said luggage compartment (100),
where the double floor (200) comprises:
- at least one through recess (1), located in at least one of the lateral ends (203) of the double floor (200), where said lateral end (203) is coincident with the at least one of the side walls where the at least one rigid element (3) is arranged, being the at least one recess (1) configured to be crossed by the rigid element (3) in the displacement of the double floor (200) between the horizontal position and the inclined position, and
- a support surface (2), arranged on the inner face of the double floor (200), between the at least one recess (1) and the rear end (201) of the double floor (200), the support surface (2) being configured to contact the rigid element (3) when the double floor (200) is arranged in the inclined position.

2. A luggage compartment according to claim 1, wherein during displacement of the double floor (200) between the horizontal position and the inclined position, the double floor (200) is capable of being arranged in an activation position, wherein said at least one recess (1) of the double floor (200) is coincident with the rigid element (3), such that said recess (1) is traversable by the rigid element (3).

3. A luggage compartment according to any one of claims 1 to 2, wherein, the double floor (200) being in the inclined position, the supporting surface (2) of the double floor (200) is coincident with the rigid element (3), such that said rigid element (3) supports the double floor (200) in said inclined position.

4. A luggage compartment according to claim 3, wherein the front end (202) of the double floor (200) is configured to rest on the floor of the luggage compartment (100) or on double floor support structures (200) arranged protruding from the side walls of the luggage compartment (100), the double floor (200) being in the inclined position.

5. A luggage compartment according to claim 2, wherein the front end (202) of the double floor (200), the double floor (200) being in the activated position, does not support with the floor of the luggage compartment (100) or with some support structures of the double floor (200) arranged protruding from the side walls of the luggage compartment (100).

6. A luggage compartment according to any one of claims 1 to 5, wherein the double floor (200) comprises a secondary body (6) mechanically linked to the front end (202) by means of a hinged joint (9).

7. A luggage compartment according to any one of claims 1 to 6, wherein the at least one rigid element (3) is fixedly arranged on at least one of the side walls of the luggage compartment (100).

8. A luggage compartment according to claim 7, wherein the at least one rigid element (3) forms a single body with the respective side wall of the luggage compartment (100).

9. A luggage compartment according to claim 7, wherein the at least one rigid element (3) is mechanically linked with the at least one side wall of the luggage compartment (100) such that a displacement of said rigid element (3) is blocked with respect to the respective side wall in the transverse direction.

10. A luggage compartment according to any one of claims 1 to 9, wherein the rigid element (3) comprises a bearing face (5) configured to contact the support surface (2) and substantially parallel to said support surface (2) of the double floor (200), the double floor (200) being in the inclined position.

11. A luggage compartment according to claim 2, wherein the rigid element (3) comprises a sliding surface (4) configured to contact by sliding with the upper surface defining the recess (1) of the double floor (200), the double floor (200) being in the activation position during displacement of said double floor (200) between the horizontal position and the inclined position.

12. A luggage compartment according to claim 11, wherein the sliding surface (4) defines an ascending ramp according to a forward direction of the vehicle, said sliding surface (4) being configured to raise the double floor (200) with respect to the base of the luggage compartment (100) in said activation position.

13. A luggage compartment according to any one of claims 10 to 12, wherein the rigid element (3) comprises a triangular-shaped cross-section.

14. A method of retaining a double floor in an inclined position in a luggage compartment (100) according to any one of claims 1 to 13, wherein the method is **characterized in that** it comprises:
- raising the rear end (201) of the double floor (200), such that the at least one recess (1) located in at least one of the side ends (203) of the double floor (200) is coincident with the rigid element (3) located in at least one of the side walls of the luggage compartment (100),
- moving the double floor (200), such that the at least one rigid element (3) passes through the respective recess (1), and
- moving the double floor (200) to the inclined position, such that the support surface (2) of the double floor (200) is coincident with the rigid element (3), said support surface (2) contacting the rigid element (3) to retain the double floor (200) in the inclined position.

15. A method of releasing a double floor from an inclined position in a luggage compartment (100) according to any one of claims 1 to 13, wherein the method is **characterized in that** it comprises:
- raising the rear end (201) of the double floor (200) from an inclined position of said double floor (200), wherein the at least one rigid element (3) located in at least one of the side walls of the luggage compartment (100) is coincident with the support surface (2) of the double floor (200), until said rigid element (3) is coincident with the at least one recess (1) located in at least one of the side ends (203) of the double floor (200);
- moving the double floor (200), such that the at least one rigid element (3) passes through the respective recess (1); and
- lowering the rear end (201) of the double floor (200) to the horizontal position.
